(19)

Europäisches
Patentamt
European
Patent Office
Office européen
des brevets

(11) **EP 3 706 418 A1**

(12) **EUROPEAN PATENT APPLICATION**

(43) Date of publication:
**09.09.2020 Bulletin 2020/37**

(51) Int Cl.:
**H04N 19/176** (2014.01)   **H04N 19/196** (2014.01)
**H04N 19/82** (2014.01)

(21) Application number: **19305270.1**

(22) Date of filing: **08.03.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **InterDigital VC Holdings, Inc.
Wilmington, DE 19809 (US)**

(72) Inventors:
• **GALPIN, Franck**
 **35576 Cesson-Sévigné (FR)**
• **BORDES, Philippe**
 **35576 Cesson-Sévigné (FR)**
• **URBAN, Fabrice**
 **35576 Cesson-Sévigné (FR)**

(74) Representative: **Huchet, Anne
InterDigital CE Patent Holdings
20, rue Rouget de Lisle
92130 Issy-les-Moulineaux (FR)**

(54) **REGULARIZATION OF LOCAL ILLUMINATION COMPENSATION FOR VIDEO ENCODING OR DECODING**

(57)   At least one embodiment relates to encoding/decoding a picture using Local Illumination Compensation (LIC) parameters computed using a derivation that comprises a regularization process and a correction process to improve the estimation of the local illumination change thus, to prevent visual artefacts.

FIG. 6

## Description

TECHNICAL FIELD

At least one of the present embodiments generally relates to local illumination compensation for video encoding or decoding and more particularly to a regularization process for the local illumination compensation.

BACKGROUND

To achieve high compression efficiency, image and video coding schemes usually employ prediction and transform to leverage spatial and temporal redundancy in the video content. Generally, intra or inter prediction is used to exploit the intra or inter frame correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

One or more of the present embodiments provide a method or an apparatus for encoding/decoding a picture using Local Illumination Compensation (LIC) that uses at least one linear model whose parameters are determined using a derivation process that comprises a regularization process and a correction process to improve the estimation of the local illumination change thus, to prevent visual artefacts.

According to a first aspect of at least one embodiment, a method for encoding picture data for at least one block in a picture, wherein the encoding comprises local illumination compensation on a block to be predicted, the local illumination compensation being performed by using at least one linear model in the form a.x + b comprises adjusting the parameters a and b according to a range of values.

According to a second aspect of at least one embodiment, a method for decoding picture data for at least one block in a picture, wherein the decoding comprises local illumination compensation on a block to be predicted, the local illumination compensation being performed by using at least one linear model in the form a.x + b comprises adjusting the parameters a and b according to a range of values.

According to a third aspect of at least one embodiment, an apparatus, comprising a video encoder for encoding picture data for at least one block in a picture, wherein the encoding comprises local illumination compensation on a block to be predicted, the local illumination compensation being performed by using at least one linear model in the form a.x + b comprises adjusting the parameters a and b according to a range of values.

According to a fourth aspect of at least one embodiment, an apparatus, comprising a a video decoder for decoding picture data for at least one block in a picture, wherein decoding comprises local illumination compensation on a block to be predicted, the local illumination compensation being performed by using at least one linear model in the form a.x + b comprises adjusting the parameters a and b according to a range of values.

According to a fifth aspect of at least one embodiment, a computer program comprising program code instructions executable by a processor is presented, the computer program implementing the steps of a method according to at least the fourth or sixth aspect.

According to an sixth aspect of at least one embodiment, a computer program product which is stored on a non-transitory computer readable medium and comprises program code instructions executable by a processor is presented, the computer program product implementing the steps of a method according to at least the fourth or sixth aspect.

BRIEF DESCRIPTION OF THE DRAWINGS

FIG. 1 illustrates a block diagram of an example of video encoder 100, such as a High Efficiency Video Coding (HEVC) encoder.
FIG. 2 illustrates a block diagram of an example of video decoder 200, such as an HEVC decoder.
FIG. 3A illustrates an example of coding tree unit and coding tree in the compressed domain.
FIG. 3B illustrates an example of division of a CTU into coding units, prediction units and transform units.
FIG. 3C illustrates an example of "L-shape" used for local illumination compensation.
FIG. 4A illustrates a prediction method in case of bi-prediction comprising a first method for derivation of LIC parameters.
FIG. 4B illustrates a prediction method in case of bi-prediction comprising a second method for derivation of LIC parameters.

FIG. 5A illustrates an example of multi model discontinuity issue.

FIG. 5B illustrates a first example technique to solve the multi model discontinuity issue.

FIG. 5C illustrates an example of determination of discontinuity size as the distance between the two linear models at the threshold position.

FIG. 5D illustrates an example of correction process for multi_models.

FIG. 6 illustrates an example embodiment of LIC comprising a regularization step.

FIG. 7 illustrates a situation where the parameters are adjusted when outside a given range.

FIG. 8 illustrates an example embodiment of regularization to prevent multi-model discontinuity issues.

FIG. 9 illustrates an example of block diagram of a multi model LIC parameters correction.

FIG. 10 illustrates a block diagram of an example of a system in which various aspects and embodiments are implemented.

DETAILED DESCRIPTION

In at least one embodiment, the video encoding or decoding uses LIC that uses at least one linear model whose parameters are determined using a derivation process that comprises a regularization process to improve the estimation of the local illumination change and a correction process to prevent discontinuity issues when using multiple linear models. Thus, visual artefacts are prevented.

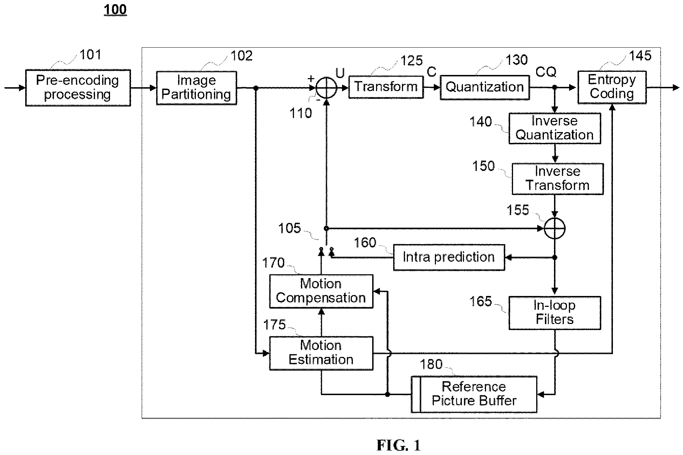

**FIG. 1** illustrates a block diagram of an example of video encoder 100, such as a High Efficiency Video Coding (HEVC) encoder. FIG. 1 may also illustrate an encoder in which improvements are made to the HEVC standard or an encoder employing technologies similar to HEVC, such as a JEM (Joint Exploration Model) encoder under development by JVET (Joint Video Exploration Team).

Before being encoded, the video sequence can go through pre-encoding processing (101). This is for example performed by applying a color transform to the input color picture (for example, conversion from RGB 4:4:4 to YCbCr 4:2:0) or performing a remapping of the input picture components in order to get a signal distribution more resilient to compression (for instance using a histogram equalization of one of the color components). Metadata can be associated with the pre-processing and attached to the bitstream.

In HEVC, to encode a video sequence with one or more pictures, a picture is partitioned (102) into one or more slices where each slice can include one or more slice segments. A slice segment is organized into coding units, prediction units, and transform units. The HEVC specification distinguishes between "blocks" and "units," where a "block" addresses a specific area in a sample array (for example, luma, Y), and the "unit" includes the collocated blocks of all encoded color components (Y, Cb, Cr, or monochrome), syntax elements, and prediction data that are associated with the blocks (for example, motion vectors).

For coding in HEVC, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block, and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB, and TB of the luma component applies to the corresponding CU, PU, and TU. In the present application, the term "block" can be used to refer, for example, to any of CTU, CU, PU, TU, CB, PB, and TB. In addition, the "block" can also be used to refer to a macroblock and a partition as specified in H.264/AVC or other video coding standards, and more generally to refer to an array of data of various sizes.

In the example of encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU and indicates the intra/inter decision by a prediction mode flag. Prediction residuals are calculated by subtracting (110) the predicted block from the original image block.

CUs in intra mode are predicted from reconstructed neighboring samples within the same slice. A set of 35 intra prediction modes is available in HEVC, including a DC, a planar, and 33 angular prediction modes. The intra prediction reference is reconstructed from the row and column adjacent to the current block. The reference extends over two times the block size in the horizontal and vertical directions using available samples from previously reconstructed blocks. When an angular prediction mode is used for intra prediction, reference samples can be copied along the direction indicated by the angular prediction mode.

The applicable luma intra prediction mode for the current block can be coded using two different options. If the applicable mode is included in a constructed list of three most probable modes (MPM), the mode is signaled by an index in the MPM list. Otherwise, the mode is signaled by a fixed-length binarization of the mode index. The three most probable modes are derived from the intra prediction modes of the top and left neighboring blocks.

For an inter CU, the corresponding coding block is further partitioned into one or more prediction blocks. Inter prediction is performed on the PB level, and the corresponding PU contains the information about how inter prediction is performed. The motion information (for example, motion vector and reference picture index) can be signaled in two methods, namely, "merge mode" and "advanced motion vector prediction (AMVP)".

In the merge mode, a video encoder or decoder assembles a candidate list based on already coded blocks, and the video encoder signals an index for one of the candidates in the candidate list. At the decoder side, the motion vector (MV) and the reference picture index are reconstructed based on the signaled candidate.

In AMVP, a video encoder or decoder assembles candidate lists based on motion vectors determined from already coded blocks. The video encoder then signals an index in the candidate list to identify a motion vector predictor (MVP) and signals a motion vector difference (MVD). At the decoder side, the motion vector (MV) is reconstructed as MVP+MVD. The applicable reference picture index is also explicitly coded in the PU syntax for AMVP.

The prediction residuals are then transformed (125) and quantized (130), including at least one embodiment for adapting the chroma quantization parameter described below. The transforms are generally based on separable transforms. For instance, a DCT transform is first applied in the horizontal direction, then in the vertical direction. In recent codecs such as the JEM, the transforms used in both directions may differ (for example, DCT in one direction, DST in the other one), which leads to a wide variety of 2D transforms, while in previous codecs, the variety of 2D transforms for a given block size is usually limited.

The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, that is, the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

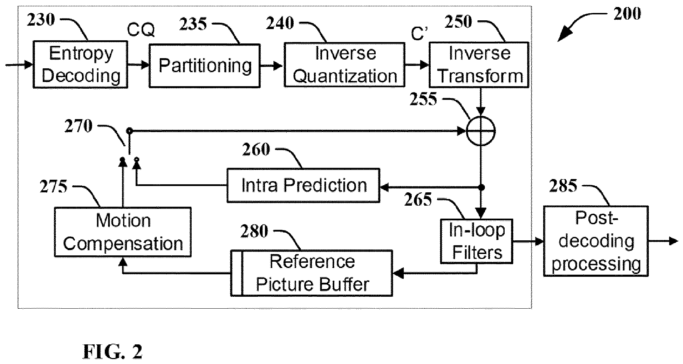

FIG. 2 illustrates a block diagram of an example of video decoder 200, such as an HEVC decoder. In the example of decoder 200, a bitstream is decoded by the decoder elements as described below. Video decoder 200 generally performs a decoding pass reciprocal to the encoding pass as described in FIG. 1, which performs video decoding as part of encoding video data. FIG. 2 may also illustrate a decoder in which improvements are made to the HEVC standard or a decoder employing technologies similar to HEVC, such as a JEM decoder.

In particular, the input of the decoder includes a video bitstream, which may be generated by video encoder 100. The bitstream is first entropy decoded (230) to obtain transform coefficients, motion vectors, picture partitioning information, and other coded information. The picture partitioning information indicates the size of the CTUs, and a manner a CTU is split into CUs, and possibly into PUs when applicable. The decoder may therefore divide (235) the picture into CTUs, and each CTU into CUs, according to the decoded picture partitioning information. The transform coefficients are de-quantized (240) including at least one embodiment for adapting the chroma quantization parameter described below and inverse transformed (250) to decode the prediction residuals.

Combining (255) the decoded prediction residuals and the predicted block, an image block is reconstructed. The predicted block may be obtained (270) from intra prediction (260) or motion-compensated prediction (that is, inter prediction) (275). As described above, AMVP and merge mode techniques may be used to derive motion vectors for motion compensation, which may use interpolation filters to calculate interpolated values for sub-integer samples of a reference block. In-loop filters (265) are applied to the reconstructed image. The filtered image is stored at a reference picture buffer (280).

The decoded picture can further go through post-decoding processing (285), for example, an inverse color transform (for example conversion from YCbCr 4:2:0 to RGB 4:4:4) or an inverse remapping performing the inverse of the remapping process performed in the pre-encoding processing (101). The post-decoding processing may use metadata derived in the pre-encoding processing and signaled in the bitstream.

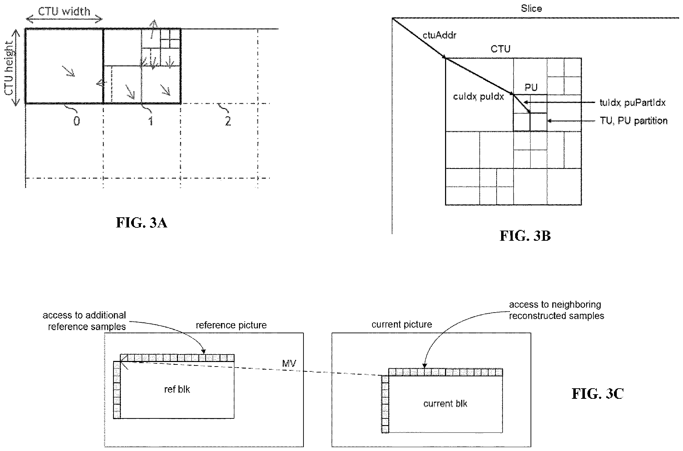

FIG.3A illustrates an example of coding tree unit and coding tree in the compressed domain. In the HEVC video compression standard, a picture is partitioned into so-called Coding Tree Units (CTU), which size is typically 64x64, 128x128, or 256x256 pixels. Each CTU is represented by a Coding Tree in the compressed domain. This is a quad-tree division of the CTU, where each leaf is called a Coding Unit (CU).

FIG. 3B illustrates an example of division of a CTU into coding units, prediction units and transform units. Each CU is then given some Intra or Inter prediction parameters Prediction Info). To do so, it is spatially partitioned into one or more Prediction Units (PUs), each PU being assigned some prediction information. The Intra or Inter coding mode is assigned on the CU level.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side. The term "block" or "picture block" can be used to refer to any one of a CTU, a CU, a PU, a TU, a CB, a PB and a TB. In addition, the term "block" or "picture block" can be used to refer to a macroblock, a partition and a sub-block as specified in H.264/AVC or in other video coding standards, and more generally to refer to an array of samples of numerous sizes.

FIG. 3C illustrates an example of "L-shape" used for local illumination compensation. Indeed, new emerging video compression tools, as studied in the Joint Exploration Model (JEM) and in the Versatile Video Coding reference software [2] developed by the JVET (Joint Video Exploration Team) group, use some additional temporal prediction tools with associated parameters determined at the decoder side, such as Local Illumination Compensation (LIC). Basically, the purpose of LIC is to compensate for illumination change which may occur between a predicted block and its reference block employed through motion compensated temporal prediction.

The use of LIC is typically signaled on the CU level, through a flag (LIC flag) associated to each coding unit (CU) coded in inter mode, or inferred from previously decoded blocks if current CU is coded in merge mode for instance. When this tool is activated, the decoder computes some prediction parameters based on some reconstructed picture samples, localized on the left and/or on the top of the current block to be predicted and reference picture samples localized on the left and/or on the top of the motion compensated block (FIG. 3C). In the considered prior art codec (JEM), the use of LIC for a given block depends on a flag associated to this block, called the LIC flag.

In the following, we will call "L-shape" associated to the current block, the set composed of the samples situated on the row above the current block and of the samples situated on the column at the left of the current block, as depicted in grey in FIG. 3C. In a variant, more than one row (one column resp.) may be used.

A first implementation of LIC uses a LIC model based on a simple linear correction of equation 1 that is applied on the regular current block prediction:

$$\mathrm{Ycorr}(x) = a.\mathrm{Ypred}(x) + b \qquad\qquad (\text{eq. } 1)$$

where Ypred(x) is the prediction sample value situated at position x, Ycorr(x) is the illumination compensated prediction sample value situated at position x, and (a,b) are the LIC parameters.

The LIC parameters (a,b) are for example weight and offset based on the minimization of an error between current samples and linearly modified reference samples, which is defined as follows in equation 2:

$$\mathrm{dist} = \sum_{r \in Vcur, s \in Vref} (\mathrm{rec\_cur}(r) - a.\,\mathrm{rec\_ref}(s) - b)^2$$

$$(\text{eq. } 2)$$

where cur(r) is a neighboring reconstructed sample in current picture (right side of FIG. 3C), ref(s) is a reference sample built with MC from reference picture (left side of FIG. 3C), with s=r+mv, cur(r) and ref(r) are co-located samples in the reconstructed and reference L-shape respectively.

The value of (a,b) can for example be obtained using a least square minimization (LSM) as formulated in equation 3 as follows:

$$a \;=\; \left( \frac{\sum ref(s) \times cur(r) - \dfrac{\sum ref(s) \times \sum cur(r)}{N}}{\sum cur(r)^2 - \dfrac{\sum ref(s) \times \sum ref(s)}{N}} \right)$$

$$b \;=\; \frac{\sum cur(r)}{N} - a \;\times\; \frac{\sum ref(s)}{N} \qquad\qquad (\text{eq } 3)$$

Note that the value of N may be furtherly adjusted (reduced incrementally) in order to the sum terms in eq.3 to remain below the maximum integer storage number value allowed (e.g. sum term $< 2^{16}$). Also, the sub-sampling of the top and left samples set can be incremented for large blocks.

Once the LIC parameters (a, b) are obtained by the encoder or the decoder for the current CU, then the prediction of current CU consists in the following (uni-directional prediction case):

$$pred(current\_block) = a \times ref\_block + b \qquad (eq.\ 4)$$

where *current_block* is the current block to predict, *pred(current_block)* is the prediction of the current block, and *ref_block* is the reference block built with regular motion compensation (MC) process that is used for the temporal prediction of the current block.

Note that the set of neighboring reconstructed and the set of reference samples (see gray samples in FIG. 3C) have the same number and same pattern. In the following, we will denote "left samples" the set of neighboring reconstructed (or the set of reference samples) situated at the left of the current block and denote "top samples" the set of neighboring reconstructed (or the set of reference samples) located at the top of the current block. We will denote "samples set" the combination of "left samples" and "top-samples" sets.

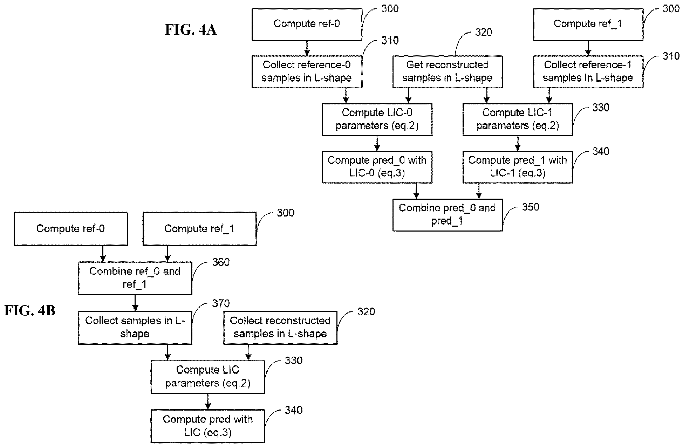

**Fig. 4A** illustrates a prediction method in case of bi-prediction comprising a first method for derivation of LIC parameters. In this case, the prediction is based on two references called reference 0 and reference 1 that are combined together. The LIC process is applied twice, first on reference 0 prediction (LIC-0) and second on the reference 1 prediction (LIC_1) (Figure 3). Next, the two predictions are combined together as usual using default weighting (P = (P0 + P1 + 1)»1) or bi-prediction weighted averaged (BPWA): P = (g0.P0 + g1.P1 + (1<<(s-1)))>>s). This method is named method-a.

**Fig. 4B** illustrates a prediction method in case of bi-prediction comprising a second method for derivation of LIC parameters. In this variant named method-b, the regular predictions are first combined in step 360. Then, a single LIC process is applied, in step 330 and the prediction is computed in step 340 according to the determined LIC parameters.

To improve the LIC, two different LIC models can be used, with distinct LIC parameters ((a0,b0) and (a1,b1)) determined for example using equation 6. A first model and first LIC parameters are used for a first subset of the samples and a second model and second LIC parameters are used for the second subset of the samples. The split between the two sets is done regarding a threshold value.

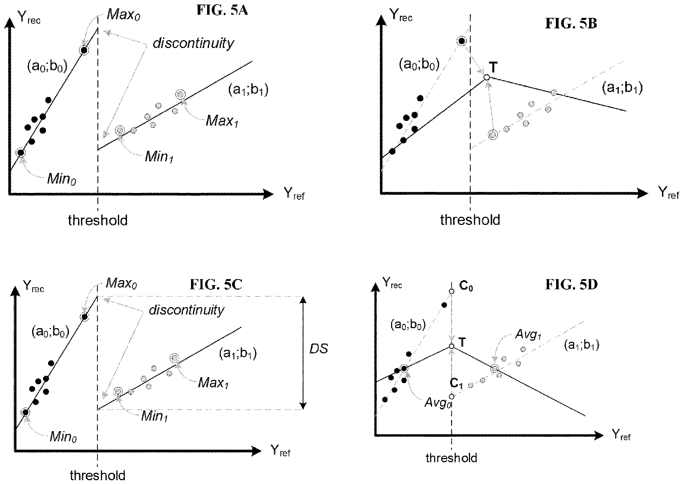

**FIG. 5A** illustrates an example of multi model discontinuity issue. This is the case where the models are discontinuous, in other word, when the two lines generated by the two models ((a0; b0) and (a1; b1)) do not intersect at threshold. This discontinuity issue may induce visual artefacts and/or reduce the coding efficiency and should be prevented.

**FIG. 5B** illustrates a first example of technique to solve the multi model discontinuity issue in case the models are built as the line going through the (Min;Max) points of each subset. The correction is done by replacing MaxO and Mini by the average between former MaxO and Mini (point T in the figure) and determining the LIC parameters of the two models using these corrected values. This prevents the discontinuity since the maximal value of first model is equal to the minimal value of the second model (equals T in the figure).

At least one issue faced by the LIC is that the derivation of the LIC parameters is based on a relatively small number of samples (see L-shape in FIG. 3C) compared to the current block size. Additionally, these samples are not co-located with the current block, so that they can be poor estimation of the local illumination change. Moreover, the LIC parameters estimation also depends on the method used to derive (a,b). For example, in case of Equation 3, some inconsistency in the value of "a" may occur if the denominator is low. This is typically the case for example when the distribution of ref(s) or cur(r) is narrow. Therefore, in some situations, the derivation of the LIC parameters comprises some uncertainty. To reduce this uncertainty a regularization process is inserted in the prediction stage so that potential problems are detected and LIC parameters are corrected accordingly to prevent visual artefacts and/or improve coding efficiency.

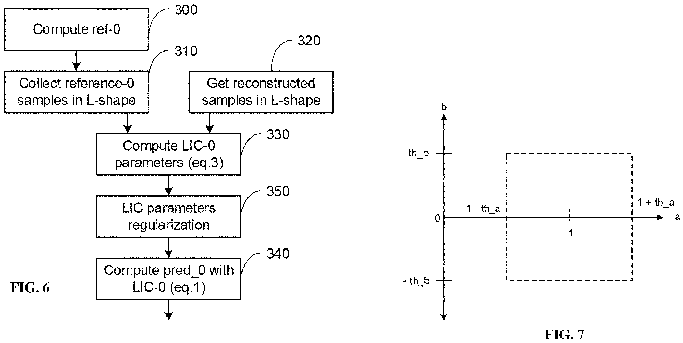

**FIG. 6** illustrates an example embodiment of LIC comprising a regularization step. In such embodiment, the overall principles including the LIC parameters derivation (330) are unchanged but a regularization step is operated in step 350, once the LIC parameters have been computed.

**FIG. 7** illustrates a situation where the parameters are adjusted when being outside a given range. In this variant embodiment, the values (a,b) are adjusted if "a" and/or "b" exceed some pre-defined thresholds (th_a, th_b) around the default (1,0) values. For example: th_a=0.25 and th_b=100 for 10-bits samples.

In at least an embodiment:

- if (a < 1 - th_a) or (a > 1+th_a) then "a" is adjusted.
- if (b < - th_b) or (b > th_b) then "b" is adjusted.

In at least an embodiment, the parameters are adjusted when outside a given range but parameter a is adjusted first and b is determined according to equation 1. Indeed, relating to equation 1, the derivation of LIC parameters is based on property r1:

$$DCrec = a. DCref + b \qquad\qquad (r1)$$

where DCrec is the average of reconstructed samples and DCref is the average of the reference samples. Therefore, in this embodiment:

- if ((b > th_b) && (a < 1 - th_a)) then

  ○ "a" is set to "1-th_a" and
  ○ "b" is computed with (r1).

- if ((b < - th_b) && (a > 1+th_a)) then

  ○ "a" is set to "1+th_a" and
  ○ "b" is computed with (r1) and thus b = DCrec - a. DCref.

In at least another embodiment, property (r1) is also verified with the adjusted values (a+da, b+db):

$$DCrec = (a+da). DCref + (b+db) \qquad (r2)$$

Given (r1), (r2) becomes:

$$da = - db / DCref \qquad\qquad (r3)$$

According to this embodiment, a is adjusted to (a+da) and b is adjusted to (b+db), the adjustment "da" being explicitly computed with (r3) and "db" determined as:

- if (b < - th_b) then db = - th_b - b

- if (b > th_b) then db = th_b - b

These regularization adjustments ensure that the LIC parameters are compliant with a certain range of values and thus, that the prediction step behaves correctly since in good conditions.

In at least an embodiment, the values of "th_a" and/or "th_b" are coded in the bitstream. For examples, they can be coded in sequence header, picture header, slice header or tile header. In another embodiment, they are fixed or associated with some profile and/or level.

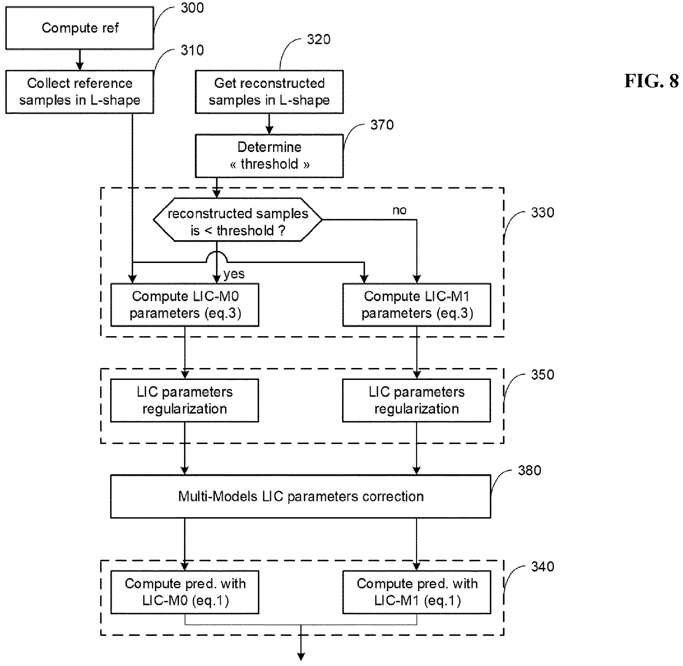

In the case of multi-model LIC, multiple regularization processes are required: one for each model (elements 350 in FIG.8) since each individual model of a multi model LIC is independent from the others.

FIG. 8 illustrates an example embodiment of regularization to handle multi-model LIC. As introduced above, two different LIC models can be used and may lead to discontinuity issue. In step 380, a correction process is added to ensure the continuity of the multiple models. This process can be implemented succeeding directly the regularization process.

In at least an embodiment, the correction process (380) is applied in merge mode only. Indeed, when the encoder detects a multi model discontinuity issue, LIC is disabled can be for one block. This is performed by encoding LIC flag to false for this block. However, in merge mode, the LIC flag is inherited from another neighboring block and the encoder has less flexibility to avoid this issue unless to re-encode recursively previous blocks.

In at least an embodiment, the correction process (380) is applied if the discontinuity size is superior to a discontinuity threshold (DT).

In at least an embodiment, the correction process (380) is applied in merge mode only and if the discontinuity size is superior to DT.

The discontinuity size (DS) can computed by the decoder in different ways:

- as the distance between the values at the crossing between each of the linear models with the threshold line as depicted in FIG. 5C for example.

- as the difference between the largest value for the first model M0 and the smallest value of the second model M1.

DS = MaxO - Mini

The value of the discontinuity threshold DT can be implicitly known by the decoder, coded in the bit-stream, computed from other decoded parameters or obtained by other means.

In at least an embodiment and as illustrated in FIG 5D, the correction step 380 of FIG. 8 operates as follows:

- Compute C0 and C1 as the values respectively given by the models M0 and M1 for Yref="threshold",

- Compute T as the average between these two values : T= (C0 + C1)/2,

- Correct M0 and M1 as the line going through (Avg0;T) and (T;Avg1), where Avg0 and Avg1 are the average of samples values below and above threshold respectively.

In a variant embodiment of former embodiment, M0 and M1 are corrected as the line going through (Min0;T) and (T;Max1), where Min0 is the smallest value of samples related to the first model M0 and Max1 is the greatest value of samples related to the second model M1.

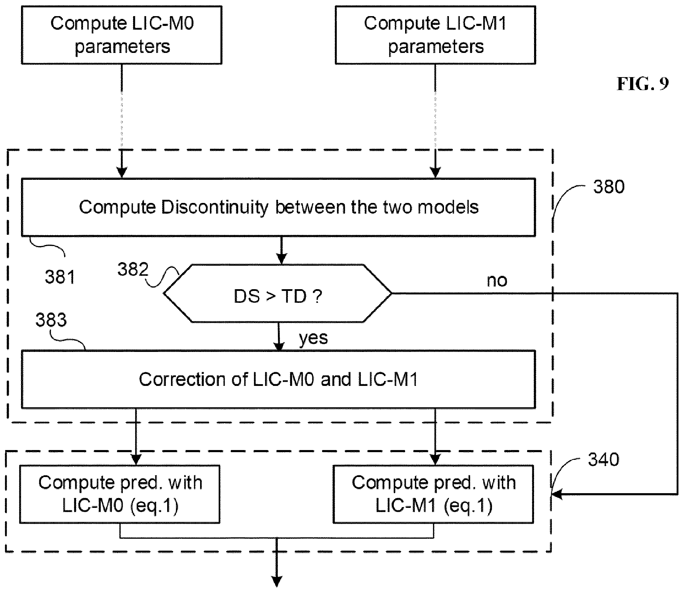

FIG. 9 illustrates an example of block diagram of a multi model LIC parameters correction. This element corresponds to block 380 of figure 8. Firstly, in step 381, the discontinuity size DS is computed between the two modes. Then, in step 382, this discontinuity size DS is compared to the discontinuity threshold DT. When DS > DT (branch "yes"), then a discontinuity issue has been detected. In this case, the third step 383 comprises correcting the LIC parameters of both models using one of the embodiments described above. When no discontinuity is detected (branch "no"), the LIC parameters are not corrected. Then, in step 340, the prediction is performed with the LIC parameters of both models.

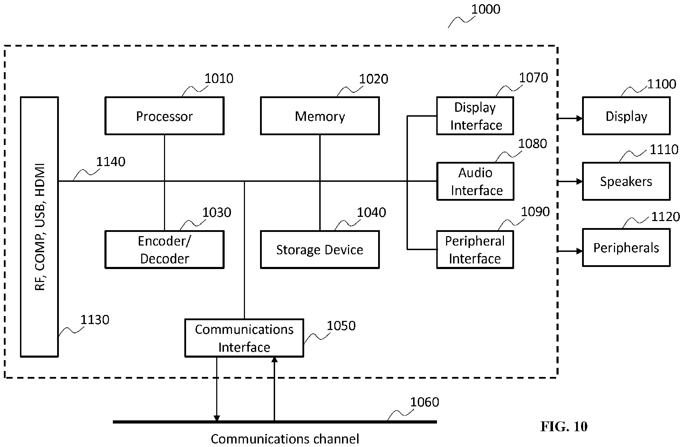

FIG. 10 illustrates a block diagram of an example of a system in which various aspects and embodiments are implemented. System 1000 can be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, encoders, transcoders, and servers. Elements of system 1000, singly or in combination, can be embodied in a single integrated circuit, multiple ICs, and/or discrete components. For example, in at least one embodiment, the processing and encoder/decoder elements of system 1000 are distributed across multiple ICs and/or discrete components. In various embodiments, the system 1000 is communicatively coupled to other similar systems, or to other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, EEPROM, ROM, PROM, RAM, DRAM, SRAM, flash, magnetic disk drive, and/or optical disk drive. The storage device 1040 can include an internal storage device, an attached storage device, and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In several embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or WC (Versatile Video Coding).

The input to the elements of system 1000 can be provided through various input devices as indicated in block 1130. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 1130 have associated respective input processing elements as known in the art. For example, the RF portion can be associated with elements necessary for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the I2C bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed to the system 1000, in various embodiments, using a Wi-Fi network such as IEEE 802.11. The Wi-Fi signal of these embodiments is received over the communications channel 1060 and the communications interface 1050 which are adapted for Wi-Fi communications. The communications channel 1060 of these embodiments is typically connected to an access point or router that provides access to outside networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130.

The system 1000 can provide an output signal to various output devices, including a display 1100, speakers 1110, and other peripheral devices 1120. The other peripheral devices 1120 include, in various examples of embodiments, one or more of a stand-alone DVR, a disk player, a stereo system, a lighting system, and other devices that provide a function based on the output of the system 1000. In various embodiments, control signals are communicated between the system 1000 and the display 1100, speakers 1110, or other peripheral devices 1120 using signaling such as AV.Link, CEC, or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs. The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, moving the information, copying the information, calculating the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory or optical media storage). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

According to a variant of first, second, third or fourth aspect, the parameter a of the at least one linear model is adjusted first when being outside of a range and parameter b of the at least one linear model is determined as being DCrec - a. DCref, where DCrec is the average of reconstructed samples for the block and DCref is the average of the reference samples for the block.

According to a variant of first, second, third or fourth aspect, the local illumination compensation uses at least two linear models and where, in the case a discontinuity of the models is detected, parameters of the models are corrected (380) to provide the continuity of the models.

According to a variant of first, second, third or fourth aspect, two linear models are used, a discontinuity is detected when the difference between the largest value for the first linear model and the smallest value of the second linear model is greater than a discontinuity threshold and in the case a discontinuity of the models is detected, parameters of the models are corrected to provide the continuity of the models.

According to a variant of first, second, third or fourth aspect, two linear models are used, a discontinuity is detected when the difference between the largest value for the first linear model and the smallest value of the second linear model is greater than a discontinuity threshold, in the case a discontinuity of the models is detected, parameters of the models are corrected to provide the continuity of the models, and the correction comprises determining a new value (T) being the average value of the crossings (Co, Ci) of a threshold value by the lines representing the two models

**Claims**

1. A method for encoding picture data for at least one block in a picture or for decoding picture data for at least one block in a picture, wherein the encoding or decoding comprises local illumination compensation on a block to be predicted, the local illumination compensation being performed by using at least one linear model in the form a.x + b and wherein the parameters a and b are adjusted (350) according to a range of values.

2. The method of claim 1 wherein the parameter a of the at least one linear model is adjusted first when being outside of a range and parameter b of the at least one linear model is determined as being DCrec - a. DCref, where DCrec is the average of reconstructed samples for the block and DCref is the average of the reference samples for the block.

3. The method of claim 1 wherein the local illumination compensation uses at least two linear models and where, in the case a discontinuity of the models is detected, parameters of the models are corrected (380) to provide the continuity of the models.

4. The method of claim 3 wherein two linear models are used and a discontinuity is detected when the difference between the largest value for the first linear model and the smallest value of the second linear model is greater than a discontinuity threshold.

5. The method of any of claim 3 or 4 wherein the correction comprises determining a new value (T) being the average value of the crossings (Co, Ci) of a threshold value by the lines representing the two models.

6. An apparatus, comprising a video encoder for encoding picture data for at least one block in a picture or a video decoder for decoding picture data for at least one block in a picture, wherein the encoding or decoding comprises local illumination compensation on a block to be predicted, the local illumination compensation being performed by using at least one linear model in the form a.x + b and wherein the parameters a and b are adjusted (350) according to a range of values.

7. The apparatus of claim 6 wherein the parameter a of the at least one linear model is adjusted first when being outside of a range and parameter b of the at least one linear model is determined as being DCrec - a. DCref, where DCrec is the average of reconstructed samples for the block and DCref is the average of the reference samples for the block.

8. The apparatus of claim 6 wherein the local illumination compensation uses at least two linear models and where, in the case a discontinuity of the models is detected, parameters of the models are corrected (380) to provide the continuity of the models.

9. The apparatus of claim 8 wherein two linear models are used and a discontinuity is detected when the difference between the largest value for the first linear model and the smallest value of the second linear model is greater than a discontinuity threshold.

10. The apparatus of any of claim 8 or 9 wherein the correction comprises determining a new value (T) being the average value of the crossings (Co, Ci) of a threshold value by the lines representing the two models.

11. Computer program comprising program code instructions executable by a processor for implementing the steps of a method according to at least one of claims 1 to 5.

**12.** Computer program product which is stored on a non-transitory computer readable medium and comprises program code instructions executable by a processor for implementing the steps of a method according to at least one of claims 1 to 5.

**100**

**FIG. 1**

FIG. 2

**FIG. 3A**

**FIG. 3B**

**FIG. 3C**

**FIG. 4A**

```
Compute ref-0 ⟋ 300          Compute ref_1 ⟋ 300
     |                              |
     ↓        ⟋ 320                 ↓
Collect reference-0 ⟋ 310    Get reconstructed    Collect reference-1 ⟋ 310
samples in L-shape           samples in L-shape   samples in L-shape
     |                              |
     ↓                              ↓
Compute LIC-0                 Compute LIC-1 ⟋ 330
parameters (eq.2)            parameters (eq.2)
     |                              |
     ↓                              ↓
Compute pred_0 with          Compute pred_1 with ⟋ 340
LIC-0 (eq.3)                 LIC-1 (eq.3)
            \                /
             ↓              ↓
        Combine pred_0 and ⟋ 350
        pred_1
```

```
Compute ref-0          Compute ref_1 ⟋ 300
     \                      /
      ↓                    ↓
   Combine ref_0 and ⟋ 360
   ref_1
        |
        ↓             ⟋ 370
   Collect samples in L-    Collect reconstructed ⟋ 320
   shape                    samples in L-shape
        \                  /
         ↓                ↓
       Compute LIC ⟋ 330
       parameters (eq.2)
            |
            ↓
       Compute pred with ⟋ 340
       LIC (eq.3)
```

**FIG. 4B**

FIG. 5A

FIG. 5B

FIG. 5C

FIG. 5D

FIG. 6

```
              ┌─────────────────┐  ┌ 300
              │  Compute ref-0  │
              └─────────────────┘      ┌ 320
                      │         ┌ 310
                      ▼
┌──────────────────────┐  ┌─────────────────────┐
│ Collect reference-0  │  │  Get reconstructed  │
│  samples in L-shape  │  │   samples in L-shape │
└──────────────────────┘  └─────────────────────┘
             │                     │
             └──────────┬──────────┘
                        ▼
              ┌─────────────────┐  ┌ 330
              │  Compute LIC-0  │
              │ parameters (eq.3)│
              └─────────────────┘
                      │               ┌ 350
                      ▼
              ┌─────────────────┐
              │  LIC parameters │
              │  regularization │
              └─────────────────┘
                      │               ┌ 340
                      ▼
              ┌─────────────────┐
              │ Compute pred_0 with│
              │   LIC-0 (eq.1)  │
              └─────────────────┘
                      │
                      ▼
```

FIG. 7

**FIG. 8**

FIG. 9

```
┌─────────────────────┐        ┌─────────────────────┐
│   Compute LIC-M0    │        │   Compute LIC-M1    │
│    parameters       │        │    parameters       │
└─────────────────────┘        └─────────────────────┘
           ┆                              ┆
           ▼                              ▼
┌ ─ ─ ─ ─ ─ ─ ─ ─ ─ ─ ─ ─ ─ ─ ─ ─ ─ ─ ─ ─ ─ ─ ─ ─ ┐
  ┌──────────────────────────────────────────────┐        380
│ │  Compute Discontinuity between the two models │ │    ⌐
  └──────────────────────────────────────────────┘
│            │                                      │
  381  382 ╲ ▼
│        ╱─────────────────────────╲     no         │
  383   ⟨      DS > TD ?             ⟩──────────────┐
│        ╲─────────────────────────╱                │  │
             │ yes                                     │
│            ▼                                      │  │
  ┌──────────────────────────────────────────────┐    │
│ │        Correction of LIC-M0 and LIC-M1        │ │  │
  └──────────────────────────────────────────────┘    │
└ ─ ─│─ ─ ─ ─ ─ ─ ─ ─ ─ ─ ─ ─ ─ ─ ─ ─ ─ │─ ─ ─ ─ ┘  │
     │                                     │           │
┌ ─ ─│─ ─ ─ ─ ─ ─ ─ ─ ─ ─ ─ ─ ─ ─ ─ ─ ─ ─│─ ─ ─ ┐   340
│    ▼                                     ▼       │ ⌐
  ┌──────────────────┐          ┌──────────────────┐  │
│ │ Compute pred. with│         │ Compute pred. with│◄┘
  │  LIC-M0 (eq.1)   │          │  LIC-M1 (eq.1)   │ │
│ └──────────────────┘          └──────────────────┘
        │                              │           │
└ ─ ─ ─ │─ ─ ─ ─ ─ ─ ─ ─ ─ ─ ─ ─ ─ ─ ─│─ ─ ─ ─ ┘
        └──────────────┬───────────────┘
                       ▼
```

FIG. 10

# EP 3 706 418 A1

**EUROPEAN SEARCH REPORT**

Application Number

EP 19 30 5270

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/109790 A1 (IKAI TOMOHIRO [JP]) 19 April 2018 (2018-04-19) | 1,2,6,7, 11,12 | INV. H04N19/176 |
| Y | * figure 11 * <br> * paragraph [0239] - paragraph [0296] * | 3-5,8-10 | H04N19/196 H04N19/82 |
| X | GISQUET (CANON) C ET AL: "Non-CE3: LM in the middle", 13. JVET MEETING; 20190109 - 20190118; MARRAKECH; (THE JOINT VIDEO EXPLORATION TEAM OF ISO/IEC JTC1/SC29/WG11 AND ITU-T SG.16 ), , no. JVET-M0384 10 January 2019 (2019-01-10), XP030201352, Retrieved from the Internet: URL:http://phenix.int-evry.fr/jvet/doc_end _user/documents/13_Marrakech/wg11/JVET-M03 84-v2.zip JVET-M0384_r1.docx [retrieved on 2019-01-10] | 1,2,6,7, 11,12 | |
| Y | * section 1.2 "Discontinuity problem in unconstrained MMLM" * | 3-5,8-10 | |
| A | HU N ET AL: "Unification of parameter derivation for CCLM and LIC", 4. JVET MEETING; 15-10-2016 - 21-10-2016; CHENGDU; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-D0122-v2, 16 October 2016 (2016-10-16), XP030150374, * section 1.1 "Introduction" * | 1-12 | TECHNICAL FIELDS SEARCHED (IPC) H04N |

-/--

The present search report has been drawn up for all claims

| Place of search | Date of completion of the search | Examiner |
|---|---|---|
| The Hague | 6 September 2019 | Stoufs, Maryse |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 19 30 5270

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHANG K ET AL: "Enhanced Cross-component Linear Model Intra-prediction", 4. JVET MEETING; 15-10-2016 - 21-10-2016; CHENGDU; (THE JOINT VIDEO EXPLORATION TEAM OF ISO/IEC JTC1/SC29/WG11 AND ITU-T SG.16 ); URL: HTTP://PHENIX.INT-EVRY.FR/JVET/,, no. JVET-D0110, 6 October 2016 (2016-10-06), XP030150354, * abstract * * section 1 "Introduction" * ----- | 1-12 | |

TECHNICAL FIELDS
SEARCHED      (IPC)

The present search report has been drawn up for all claims

| Place of search | Date of completion of the search | Examiner |
|---|---|---|
| The Hague | 6 September 2019 | Stoufs, Maryse |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 30 5270

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2019

| Patent document cited in search report | Publication date | Patent family member(s) | | Publication date |
|---|---|---|---|---|
| US 2018109790 A1 | 19-04-2018 | CN | 105393534 A | 09-03-2016 |
| | | EP | 3013049 A1 | 27-04-2016 |
| | | HK | 1222490 A1 | 30-06-2017 |
| | | JP | 6360053 B2 | 18-07-2018 |
| | | JP | 2018174567 A | 08-11-2018 |
| | | JP | WO2014203726 A1 | 23-02-2017 |
| | | US | 2016134869 A1 | 12-05-2016 |
| | | US | 2018109790 A1 | 19-04-2018 |
| | | WO | 2014203726 A1 | 24-12-2014 |

EPO FORM P0459

For more details about this annex : see Official Journal of the European Patent Office, No. 12/82